# EUROPEAN PATENT APPLICATION

(11) **EP 1 791 285 A1**
(43) Date of publication of application: **30.05.2007**
(21) Application number: 05292530.2
(22) Date of filing: 29.11.2005
(51) Int. Cl.: H04L 1/00, H04L 1/18

(54) **Hybrid ARQ apparatus and corresponding method, wherein the FEC redundancy is adapted based on the number of retransmissions of a packet**

(71) Applicant: Alcatel Lucent, 75008 Paris (FR)
(72) Inventor: Degrande, Natalie, 9290 Overmere (BE); De la Vallee, Paloma, 1982 Weerde (BE); De Vleeschauwer, Danny, 9940 Evergem (BE)
(74) Representative: Narmon, Gisèle Marie Thérèse

(57) **Abstract**

The invention concerns a data packet retransmission arrangement having a retransmission buffer, a counter, a forward error correction device and control logic. The retransmission buffer stores recently transmitted data packets. The counter keeps track of the number of retransmission requests received for a data packet (211). If this number is below a first integer value K, the data packet is retransmitted (212, 213). If this number is equal to or above the first integer value K, the forward error correction device calculates N forward error correction packets on L-1 recently transmitted data packets plus the data packet to be retransmitted (211), N being a second integer value equal to or larger than zero, and L being a third integer value equal to or larger than 1. In the latter case, the data packet is retransmitted together with the N forward error correction packets (214).

## Description

### Field of the Invention

The present invention generally relates to data packet retransmission and Forward Error Correction (FEC) for protection of data packet transmissions against packet loss or packet corruption due to noise on wire-bound or wireless links, like for instance a Digital Subscriber Line (DSL) or a Wireless Local Area Network (WLAN) link. Data packet in the context of the current patent application means any fixed length or variable length packet conveying information of whatever nature or service (voice, video, TV, Internet, gaming, multimedia, data files, ...) over links of a communication network.

### Background of the Invention

Due to noise, wire-bound and wireless physical layers are prone to bit errors that ultimately may translate in data packet loss. At the link layer, solutions exist for protection against bit errors on the physical layer. In general, two main techniques exist for error protection in packet based networks: retransmission and Forward Error Correction (FEC). These techniques must ensure that the services (e.g. voice, video, data transfer) can run at the desired quality of experience (QoE). In order to achieve for instance an acceptable video quality, the viewer of High Definition Television (HDTV) should not be faced with more than one Visible Distortion in Twelve hours (1 VDT) caused by loss of video packets. When the packets that contain the video information are sent over an indoor wireless link, the packet loss rate can amount to several percents. Typical packet loss rates on indoor wireless links are 2% to 5 %. Hence, protection of the video packets through retransmission or FEC is indispensable. Also in a wired scenario where the video packets are for instance sent over an interleaved DSL line, the objective of 1 VDT cannot be guaranteed without proper protection of the video packets. Worst case packet loss rates on DSL lines are in the range of 10⁻⁴ to 10⁻⁵, leading to approximately 1 visible distortion each 30 seconds for HDTV at 8Mb/s

Retransmission consists in transmitting a copy of an earlier transmitted data packet that got lost or corrupted, either on request of the receiver or automatically when a certain time period has lapsed and no receipt acknowledgement has been received. Retransmission techniques are efficient in terms of overhead - only data packets that are effectively lost or corrupted, are retransmitted - but the delay or latency associated with retransmission can be very large. This is in particular the case when the retransmissions are requested from a remote buffer, in case of a slow link, or in case the number of requested retransmissions is high. For Broadcast TV services for instance, the maximum acceptable zapping delay puts an upper bound of about 150 milliseconds on the allowed latency. In case where retransmission is used to recover video packets that were lost or corrupted during transmission over a DSL line, the round-trip delay - this is the time required to request retransmission from the Set-Top Box (STB) to the DSLAM plus the time required to retransmit the packet from the DSLAM to the STB over the DSL line - can amount up to 40 milliseconds. In the wireless scenario where the wireless router is equipped with a retransmission buffer from which retransmission of a video packet can be requested in case of an error due to transmission over the indoor wireless link, the round-trip delay usually stays below 5 milliseconds. In the Wireless LAN scenario where a video packet gets lost in a channel that is the concatenation of a DSL line and an indoor wireless channel, and where retransmission must be requested from the DSLAM, the round-trip delay consequently may be expected to be around 45 milliseconds. Concluding, although retransmission techniques are economical in sending overhead information on the link, the major bottleneck related to retransmission is the introduced latency which restricts the maximum amount of retransmissions. Depending on the service and the round-trip delay of the physical layer, the acceptable number of retransmissions for a data packet might be as low as 2 or 3 (e.g. in case of video service over a DSL link).

Forward Error Correction (FEC) techniques add parity packets or FEC packets to the content stream in order to enable the receiver to reconstruct lost or corrupted packets without having to request retransmission. A drawback of FEC techniques is that all packets are protected through FEC packets, also the packets that are received free of errors. FEC techniques in other words introduce a permanent, additional overhead which can be too large in some cases. Further, FEC techniques introduce delays as well, because collecting the packets upon which the FEC decoding has to be calculated takes time since these packets do not arrive instantly but arrive at the rate of the link. In a wired scenario where for instance video packets are sent over a DSL loop operating at 20 Mbps, an overhead of more than 6 % cannot be tolerated. This restriction of low overhead and low latency (the zapping delay must stay below 150 ms) impedes the use of for instance powerful binary FEC codes to protect video packets sent over DSL lines. On indoor wireless links, more powerful FEC codes can be used since the allowed overhead is substantially in excess of that on a DSL link. A wireless link can operate at 54 Mbps while HDTV requires a video bit rate of about 8 Mbps. Assuming that about 30 to 35 Mbps is effectively at the disposal for transmission of video packets over the wireless indoor link, it is clear that the allowed overhead can be much higher than the 5 à 6 % acceptable on DSL links. Studies have shown that powerful binary codes on wireless links require a very high overhead, in excess of 60 %, in order to comply with the viewers demand of less than 1 VDT. Reed-Solomon codes are an alternative to their binary counterparts, requiring only 20 à 30 % overhead on wireless links, but Reed-Solomon codes are less appealing because of their higher decoding complexity.

Summarizing, the latency introduced by conventional retransmission techniques is often too large to attain an acceptable quality of experience (e.g. a good zapping performance). This is so because in order to reach a packet loss ratio that is low enough (e.g. at most 1 VDT for video services), certain packets need to be retransmitted more than once. In particular on wireless links where the packet loss ratio can amount to several percents or on wire-bound links where the round-trip delay equals several tens of milliseconds, conventional retransmission techniques may not perform satisfactory. FEC techniques on the other hand introduce overhead on top of the payload packets, and the overhead might be too large. This is so because in order to reach a packet loss ratio that is low enough, powerful FEC codes may be required, introducing unacceptably high permanent overhead.

It is an object of the present invention to disclose a packet retransmission technique that achieves optimal performance with minimum latency, minimum overhead and minimum complexity, both in wire-bound and wireless scenario's.

### Summary of the Invention

The above object is achieved by the data packet retransmission arrangement defined in claim 1, having:
a. a retransmission buffer for storing recently transmitted data packets;
b. a counter for counting the number of retransmission requests received and for comparing that number to a first integer value K;
c. a forward error correction device able to calculate N FEC packets on L-1 recently transmitted data packets plus the data packet to be retransmitted; and
d. control logic adapted to control the retransmission buffer and the forward error correction device to either retransmit the data packet if the number of received retransmission requests is below K, or to transmit the data packet together with the N FEC packets if the number of received retransmission requests is equal to K.

Indeed, the basic idea underlying the current invention is a new retransmission strategy. The number of retransmissions is for each packet restricted to a certain value K. If a packet is lost K times in succession, this packet will be grouped with L-1 recently transmitted packets, and this set of L packets is protected by N FEC packets, transmitted immediately after the Kth retransmission of the lost data packet. The N FEC packets will enable to reconstruct the data packet in case of a subsequent loss (during the Kth retransmission), and eventually will enable to recover one or more of the L-1 recently transmitted packets that are used for the FEC packet calculation. If the integer K is chosen adequately, the latency can be kept under the desired bound and if the FEC parameters are chosen adequately, the overhead and complexity can be kept under control while at the same time attaining a rate of distortions (packet losses or packet corruptions) that stays below the maximum acceptable distortion rate for a certain quality of experience. No permanent FEC overhead will be transmitted for packets that are transmitted free of errors or packets that can be recovered within K-1 retransmissions. The latency will not extend beyond the delay introduced by K retransmissions, because the Kth retransmission must enable recovery of the packet, either through the retransmission or through FEC decoding. The FEC encoding/decoding complexity can be kept simple by choosing for instance one or more copies of the L packets as FEC packets.

It is noted that the above objects of the current invention are further achieved through the method for retransmitting data packets defined by claim 10.

An additional feature of the packet retransmission arrangement according to the current invention is, as defined by claim 2, that K is preconfigured such that K retransmissions of the packet still arrive within a predefined, acceptable delay bound. This way, K-1 FEC-less retransmissions and one FEC-enhanced retransmission of the data packet can be used for packet recovery without affecting the quality of experience. The delay bound is predefined and dependent upon location of the retransmission buffer, application, nature of the physical medium, bitrate, DSL mode, availability of other error resilience modes, etc.

For instance in case of video services offered over a DSL loop whereby the retransmission buffer is integrated in the DSLAM, the delay bound could be chosen equal to 150 milliseconds, as in claim 3. This way, K-1 FEC-less retransmissions and one FEC-enhanced retransmission of the data packet will not exceed the maximum zapping delay of 150 milliseconds, acceptable for viewers that use a video or TV service.

An optional feature of the packet retransmission arrangement according to the current invention is that N might be chosen equal to 0, as defined by claim 4.

Thus, even if the functionality is available to perform a last retransmission enhanced with FEC, the parameters of a packet retransmission arrangement according to the current invention may be configurable such that the Kth and last retransmission will be a simple retransmission of one copy of the requested packet.

An optional feature of the packet retransmission arrangement according to the current invention is that L might be chosen equal to 1, as defined by claim 5. In this case, no recently transmitted packets other than the requested packet will be used in the FEC calculation. In a particular implementation, the N FEC packets may be N ordinary copies of the packet requested to be retransmitted, thereby minimizing the complexity while still performing better than prior art retransmission or FEC systems because K+N copies of the packet are now available for recovery within the delay bound.

As is indicated by claims 6 to 9, a packet retransmission arrangement according to the current invention might be integrated in different kinds of network equipment, i.e. access nodes like a Digital Subscriber Line Multiplexer (DSLAM), a Digital Loop Carrier (DLC) a Cable Modem Termination System (CMTS), an optical fibre aggregator, etc.; end-user equipment like a home gateway, a Set-Top Box (STB), a DSL modem, a wireless router, a PC, a video codec, etc.; switching/routing gear like an edge IP router, a core IP router, a switch/router, etc.

### Brief Description of the Drawings

Fig. 1 illustrates a data packet retransmission scheme according to the prior art;
Fig. 2 illustrates a data packet retransmission scheme according to the present invention;
Fig. 3 illustrates in a flow chart an embodiment of the data packet retransmission method according to the present invention; and
Fig. 4 illustrates a functional block scheme of an embodiment of the data packet retransmission arrangement according to the present invention.

### Detailed Description of Embodiment(s)

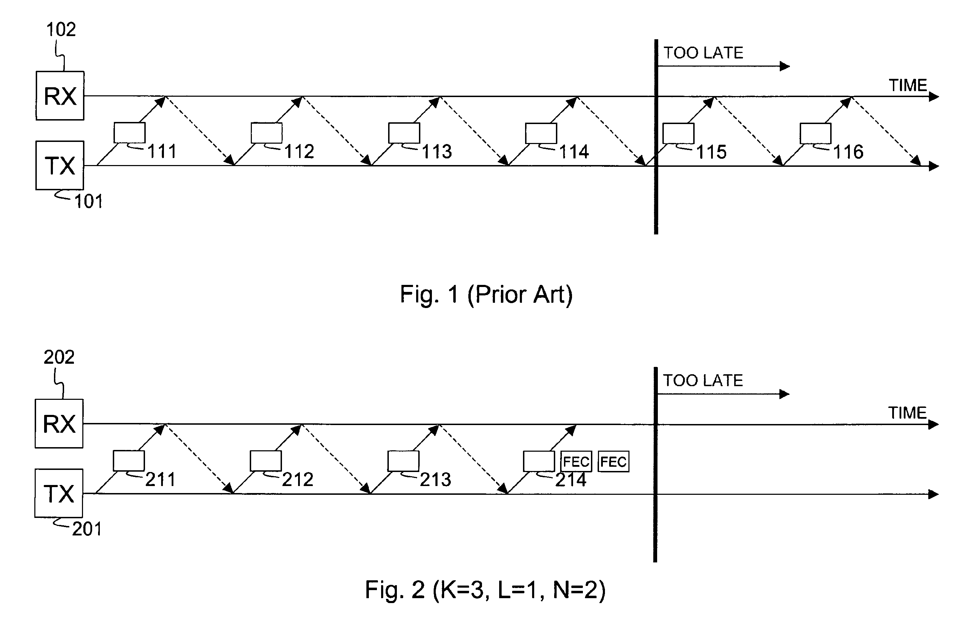

In Fig. 1 conventional retransmission over a DSL loop is illustrated. The round trip time, i.e. the time to send a video packet like 111 from the transmitter 101 integrated in the DSLAM to the receiver 102 integrated in the end user's video decoder plus the time to send a retransmission request back from the receiver 102 to the transmitter 101, is supposed to equal 35 milliseconds (note that this value is chosen by example: for interleaved DSL, values around 40 milliseconds are found in literature). The maximum acceptable delay in delivering video packets is assumed to be 150 milliseconds for zapping purposes. Packets that are delivered with a delay exceeding 150 milliseconds in other words arrive too late and cannot be used anymore for display to the viewer. The video packet 111 in Fig. 1 is supposed to be corrupted or lost on the DSL line. In response to the retransmission request, represented by the dashed arrow in Fig. 1, the transmitter 101 re-sends a copy of the video packet 111. This copy has the reference 112 in Fig. 1. This copy 112 of the video packet as well as the next two retransmissions of that same video packet, referred to by 113 and 114 in Fig. 1, are all corrupted or lost. New retransmission requests are sent back to the transmitter 101 in the DSLAM after the packets 112, 113 and 114 have been sent. Also after the 3rd retransmission, the transmitter 101 continues to respond to the retransmission requests by sending additional copies of the video packet. These copies, 115 and 116 in Fig. 1, however arrive after the 150 milliseconds deadline and are of no use to the decoder. In Fig. 1, no uncorrupted sample of the video packet arrives in time at the decoder, resulting in a visible distortion on the screen.

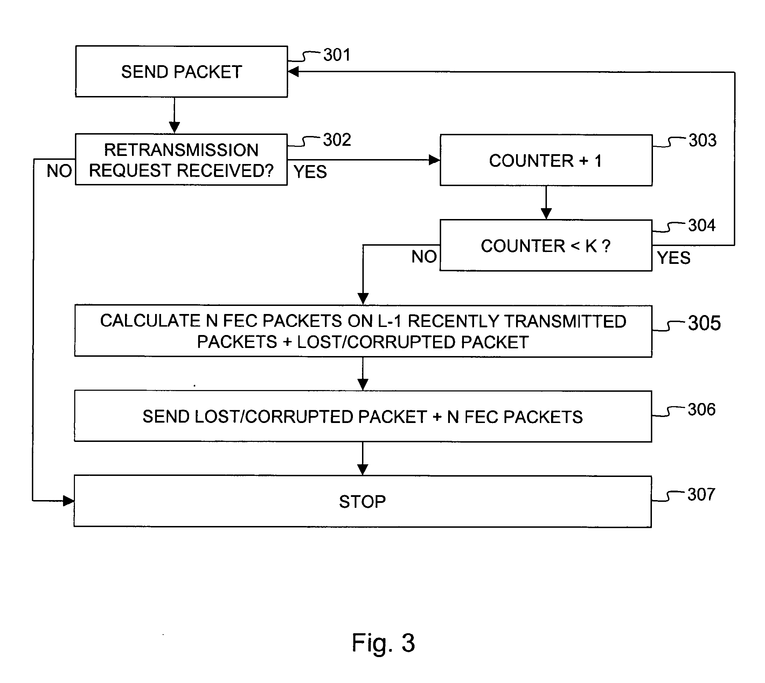

In Fig. 2 it is assumed that the transmitter 201 is now integrated in a DSLAM that has a retransmission and FEC arrangement operating according to the flow chart depicted in Fig. 3. The transmitter 201 sends a video packet in step 301 of the flow chart. Just like in Fig. 1, the original video packet 211 is supposed to be corrupted along the DSL transmission path towards the receiver 202 in the end user's video decoder. As a consequence, a retransmission request is sent back to the transmitter 201 (the dashed arrow in Fig. 2), and received by the transmitter 201 in step 302 of the flow chart. The retransmission and FEC arrangement inside transmitter 201 is supposed to have three parameters: K, L and N, configured to be equal to the values 3, 1 and 2 respectively. For parameter K, the value 3 was chosen because at most 3 retransmissions can be afforded within the delay bound of 150 milliseconds, knowing that the round trip time equals 35 milliseconds. Upon receipt of the first retransmission request, the transmitter 201 increases its retransmission counter from 0 to 1 in step 303 of the flow chart. The counter value is compared to the value of the parameter K in step 304 and since 1< 3, the transmitter 201 continues by sending a first copy of the video packet. This copy is named 212 in Fig. 2. In Fig. 3, the transmitter has returned to step 301. The first copy 212 is also supposed to be corrupted. As a result, a second retransmission request is sent back to the DSLAM and upon arrival there (step 302 in Fig. 3), the retransmission and FEC arrangement increases its retransmission counter from 1 to 2 (step 303), compares the counter value to the parameter value K (step 304), and since 2 < 3 the transmitter 201 progresses to step 301 to send a second copy of the video packet. This second retransmission is named 213 in Fig. 2. Also the second retransmission 213 gets lost or is corrupted on its way to the receiver 202, and a new retransmission request is issued and received by the DSLAM in another execution of step 302. The retransmission counter is now increased from 2 to 3 in step 303. In step 304 of the flow chart the retransmission and FEC arrangement in transmitter 201 decides to progress with step 305 because the retransmission counter is no longer smaller than parameter K (both are equal to 3). The retransmission and FEC arrangement therefore calculates 2 FEC packets on the corrupted packet. Since the parameter L was chosen equal to 1, no other transmitted packets are involved in the FEC calculation. The FEC packets can be code-words calculated on the video packet to be retransmitted (e.g. Reed-Solomon or binary code-words), or they may be simple copies of the video packet to be retransmitted. The packet to be retransmitted as well as the 2 FEC packets are then sent to the receiver 202 in step 306 of the flow chart. This is illustrated by 214 in Fig. 2. This third retransmission along with the 2 FEC packets still arrive within the acceptable delay bound of 150 milliseconds and are used at the receiver 202 for decoding and displaying. Even if the third retransmission of the packet gets corrupted (as was the case in Fig. 1), the receiver 202 can still rely on the 2 FEC packets to recover the corrupted packet. In case the 2 FEC packets are copies of the video packet 211, the last retransmission includes 3 copies of the same video packet. It is sufficient if one of these 3 packets arrives uncorrupted at the receiver 202 in order to enable decoding and displaying of the video stream without visible distortion for the viewer. After the last retransmission including the FEC packets, the retransmission and FEC arrangement in transmitter 201 transits to step 307 of the flow chart.

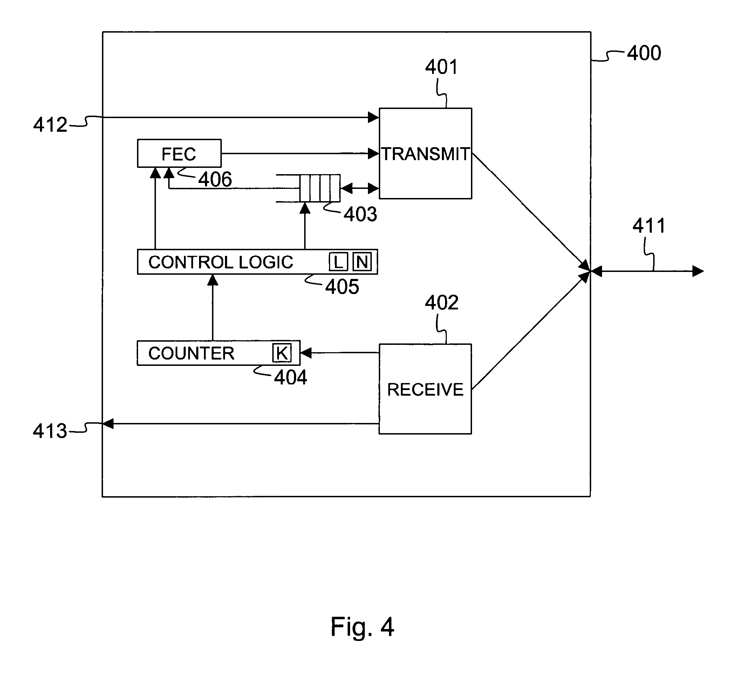

A possible architecture for the retransmission and FEC arrangement used in the transmitter 201 of Fig. 2, is shown in Fig. 4. The retransmission and FEC arrangement 400 shown there has a transmitter 401 and receiver 402 for coupling to the transmission medium 411 which was supposed to be a DSL line in the case of Fig. 2. The transmitter and receiver may for instance be a DMT (Discrete Multi Tone) ADSL transmitter and receiver. They may be integrated in a single transceiver. The transmitter 401 has an input 412 whereto new video packets are applied for transmission. The transmitter 401 further interfaces with a retransmission buffer 403 for temporary storage of recently transmitted video packets, and it has an input whereto an output of a Forward Error Correction device 406 is connected. Obviously, these interfaces of the transmitter 401 are logical interfaces that may be combined or integrated in one or more physical ports or pins. The receiver 402 has an output 413 for sourcing the video packets that have been received, and it has a control output interconnected with a retransmission counter 404. Each time a retransmission request is received for a video packet, this control interface will convey instructions for increasing the retransmission counter for that particular video packet by one. The retransmission counter 404 further has a parameter register K whose value is predefined and represents the maximum allowable amount of retransmissions. As already indicated above, the value of the parameter K may be determined on the basis of various elements, such as the physical medium, the bitrate, application needs, etc. K is in any case determined such that a packet that is retransmitted K times still arrives in time. In case of Fig. 2, the value 3 is kept in this register. In addition to maintaining a counter value for the number of retransmissions of each video packet, the counter 404 has the ability to compare the counter values with the parameter K value, and to inform the control logic 405 on the outcome of that comparison. With the information received from the counter 404, the control logic 405 decides what the next steps are. In case the counter value for a video packet is below the value K (the packet was lost/corrupted less than K times), the control logic 405 shall instruct the retransmission buffer 403 to re-send a copy of the video packet for which a retransmission request was received. In case the counter value for a video packet has reached the value K (the packet was lost/corrupted K times), the control logic 405, shall instruct the Forward Error Correction Device 406 to calculate N FEC packets. The parameter N is kept in a register of the control logic 405 and is supposed to be pre-programmed. In case of Fig. 2, the parameter N for instance was given the value 2. The N FEC packets have to be calculated on the basis of the video packet for which a retransmission request was received and L-1 other recently transmitted video packets. The parameter L is again kept in a register in the control logic 405. For obtaining the video packet to be retransmitted and the other L-1 recently transmitted video packets, the FEC device 406 interfaces with the retransmission buffer 403 that stores all these packets. In case of Fig. 2, the parameter L is pre-programmed to equal 1, which implies that the 2 FEC packets are to be calculated only on the basis of the video packet to be retransmitted. The FEC packets and the packet to be retransmitted are finally forwarded to the transmitter 401 for an ultimate, K'th retransmission including both the corrupted/lost video packet and the N FEC packets.

Although the present invention has been illustrated by reference to a specific embodiment and specific drawings, it will be apparent to those skilled in the art that various changes and modifications may be made within the spirit and scope of the invention. It is therefore contemplated to cover any and all modifications, variations or equivalents that fall within the spirit and scope of the basic underlying principles disclosed and claimed in this patent application. For example, the retransmission and FEC arrangement might be used in a completely different environment, where it is integrated in a node that is not a DSLAM or access aggregating network node in order to control retransmission and forward error correction for packets of various applications. The retransmission and FEC arrangement may for instance form part of a home gateway where it keeps track of the number of retransmissions of packets sent over wireless inhouse links. Based on that number, it is decided whether there is sufficient time left for a regular retransmission over the wireless link or whether Forward Error Correction has to be applied for a final retransmission. From an architectural point of view, it will be understood by a person skilled in the art of designing network equipment, that the different functional blocks shown for instance in Fig. 4 may be implemented in software, hardware or a combination thereof. Certain functions, like the counter, the control logic and the FEC calculation may be integrated in a single software module. The invention is also not restricted to any particular choice of the FEC algorithm. Depending on the affordable complexity, calculation time, etc., the designer shall choose the one or the other FEC scheme. In its simplest version, the current invention can be implemented with a FEC device that just produces copies of the packet to be retransmitted and/or the L-1 recently transmitted packets. The L-1 recently transmitted packets may for instance be the last L-1 packets for which no acknowledgement has been received so far. This way, the FEC packets could also be used at the receiver's side for recovering one or more of the L-1 recently transmitted packets, in addition to protecting the packet that has to be retransmitted. Again, the choice of the L-1 packets to be used for the FEC calculation is an implementation choice left to the designer. In its simplest version, the current invention is implemented with L equal to 1, implying that no additional packets will be considered for the FEC calculation. It is also important to notice and understand that the invention can be implemented end-to-end between the original source and the final destination of a packet, but could be implemented with same advantages locally on a single link or network segment where enhanced protection of the packet transmission is desirable. Also, the invention can be applied on subsequent network segments with different values for the parameters K, L and N, taking into account local considerations.

## Claims

1. A data packet retransmission arrangement (400) adapted to retransmit a data packet (211) upon receipt of a retransmission request, said data packet retransmission arrangement (400) comprising:
a. a retransmission buffer (403) for storing recently transmitted data packets;
**CHARACTERIZED IN THAT** said data packet retransmission arrangement (400) further comprises:
b. a counter (404) for counting the number of retransmission requests received for said data packet (211), and for comparing said number of retransmission requests to a first integer value K;
c. a forward error correction device (406) able to calculate N forward error correction packets on L-1 recently transmitted data packets plus said data packet (211) to be retransmitted, N being a second integer value equal to or larger than zero, and L being a third integer value equal to or larger than 1; and
d. control logic (405) adapted to control said retransmission buffer (403) and said forward error correction device (406) to either retransmit said data packet (211) if said number of retransmission requests is below K, or to transmit said data packet (211) together with said N forward error correction packets if said number of retransmission requests is equal to K.

2. A data packet retransmission arrangement (400) according to claim 1,
**CHARACTERIZED IN THAT** said first integer value K is preconfigured such that K retransmissions of said data packet (211) still arrive within a predefined, acceptable delay bound.

3. A data packet retransmission arrangement (400) according to claim 2,
**CHARACTERIZED IN THAT** said predefined acceptable delay bound equals 150 milliseconds.

4. A data packet retransmission arrangement (400) according to claim 1,
**CHARACTERIZED IN THAT** said second integer value N is configured to be zero.

5. A data packet retransmission arrangement (400) according to claim 1,
**CHARACTERIZED IN THAT** said third integer value L is configured to be one, and said N forward error correction packets are copies of said data packet (211) to be retransmitted.

6. A data packet retransmission arrangement (400) according to claim 1,
**CHARACTERIZED IN THAT** said data packet retransmission arrangement (400) is integrated in a Digital Subscriber Line Access Multiplexer (DSLAM).

7. A data packet retransmission arrangement (400) according to claim 1,
**CHARACTERIZED IN THAT** said data packet retransmission arrangement (400) is integrated in a Set-Top Box (STB).

8. A data packet retransmission arrangement (400) according to claim 1,
**CHARACTERIZED IN THAT** said data packet retransmission arrangement (400) is integrated in a wireless router.

9. A data packet retransmission arrangement (400) according to claim 1,
**CHARACTERIZED IN THAT** said data packet retransmission arrangement (400) is integrated in a home gateway.

10. A method for retransmitting a data packet (211) upon receipt of a retransmission request, said method comprising:
a. storing recently transmitted data packets;
**CHARACTERIZED IN THAT** said method further comprises:
b. counting the number of retransmission requests received for said data packet (211);
c. comparing said number of retransmission requests with a first integer value K, and if said number of retransmission requests is below K the step of:
d. retransmitting said data packet (211);
or if said number of retransmission requests is equal to K the steps of:
e. calculating N forward error correction packets on L-1 recently transmitted data packets plus said data packet to be retransmitted (211), N being a second integer value equal to or larger than zero, and L being a third integer value equal to or larger than 1; and
f. transmitting said data packet (211) together with said N forward error correction packets.
